Europäisches Patentamt

European Patent Office

Office européen des brevets

(11) Veröffentlichungsnummer : **0 394 839 B1**

(19)

(12) **EUROPÄISCHE PATENTSCHRIFT**

(45) Veröffentlichungstag der Patentschrift :
**03.11.93 Patentblatt 93/44**

(21) Anmeldenummer : **90107432.8**

(22) Anmeldetag : **19.04.90**

(51) Int. Cl.⁵ : **C08J 9/14,** C08J 7/04,
F25D 23/08, B32B 5/20,
// C08L75:04

(54) **Verbundelemente mit verbesserter Beständigkeit gegen Spannungsrisskorrosion, insbesondere für Kühlmöbelgehäuse.**

(30) Priorität : **22.04.89 DE 3913328**

(43) Veröffentlichungstag der Anmeldung :
**31.10.90 Patentblatt 90/44**

(45) Bekanntmachung des Hinweises auf die
Patenterteilung :
**03.11.93 Patentblatt 93/44**

(84) Benannte Vertragsstaaten :
**AT BE CH DE DK ES FR GB IT LI NL SE**

(56) Entgegenhaltungen :
**EP-A- 0 306 923
GB-A- 1 015 614
US-A- 4 048 274
US-A- 4 636 529**

(73) Patentinhaber : **BASF Aktiengesellschaft
Carl-Bosch-Strasse 38
D-67063 Ludwigshafen (DE)**

(72) Erfinder : **Henn, Rolf, Dr.
Lilienweg 3
D-6834 Ketsch (DE)**
Erfinder : **Leppkes, Reinhard, Dr.
Eschkopfstrasse 2
D-6712 Bobenheim-Roxheim (DE)**

EP 0 394 839 B1

**Beschreibung**

Gegenstand der Erfindung sind Verbundelemente mit einer verbesserten Beständigkeit gegen Spannungsrißkorrosion, die bestehen aus

A) mindestens einer Deckschicht aus vorzugsweise schlagfestem Polystyrol und

B) einer Schicht aus vorzugsweise Polyurethan-Hartschaumstoff, wobei diese hergestellt wird unter Verwendung von Difluorchlormethan oder einer Mischung aus Wasser, Difluorchlormethan und gegebenenfalls Trichlorfluormethan als Treibmittel.

Die Herstellung von Verbundelementen, die aufgebaut sind aus einem Polyurethan - im folgenden abgekürzt PU genannt - Hartschaum und mindestens einer Deckschicht aus einem starren oder elastischen Material, sind bekannt. Derartige Verbundelemente sind z.B. Dämmplatten mit Deckschichten aus Natronkraft-, Asbest- oder Kreppapier, bituminiertem Papier, Polyethylen beschichteten Glasvliesen und Aluminiumfolien, Bauelemente mit beidseitigen metallischen Deckschichten aus beispielsweise lackiertem oder beschichtetem Stahl- oder Aluminiumblech oder Kombinationsplatten mit einer Deckschicht aus einer starren Platte, wie z.B. einer Span-, Gipskarton-, Glasfaser-, Steinwoll- oder Perliteplatte, und einer rollbaren Deckschicht aus z.B. Bitumenpapier oder Glasvlies. Als Treibmittel zur Herstellung von PU-Hartschaumstoffen, die sich auch als Zwischenschicht eignen, werden bevorzugt Trichlorfluormethan und Dichlordifluormethan, gegebenenfalls in Verbindung mit Kohlendioxid aus der Isocyanat-Wasser-Reaktion, genannt.

Bekannt ist ferner die Ausschäumung von Hohlräumen in Hausgeräten, wie z.B. Kühlmöbeln oder Heißwasserspeichern, mit PU-Hartschaumstoff als Wärmedämmstoff. Um Schaumfehlstellen zu vermeiden, muß hierzu das schaumfähige PU-Reaktionsgemisch innerhalb einer kurzen Zeit, z.B in 5 bis 10 Sekunden in den zu isolierenden Hohlraum eingefüllt werden. Zum Ausschäumen derartiger Hausgeräte werden üblicherweise Niederdruck- und vorzugsweise Hochdruckmaschinen eingesetzt.

Hierfür geeignete wärme- und kältedämmende PU-Hartschaumstoffe können bekanntermaßen durch Umsetzung von organischen Polyisocyanaten mit einer oder mehreren höhermolekularen Verbindungen mit mindestens zwei reaktiven Wasserstoffatomen, vorzugsweise Polyester- und/oder Polyether-polyolen, sowie üblicherweise unter Mitverwendung von niedermolekularen Kettenverlängerungsmitteln und/oder Vernetzungsmitteln in Gegenwart von Katalysatoren, Treibmitteln und gegebenenfalls Hilfsmitteln und/oder Zusatzstoffen hergestellt werden. Bei geeigneter Wahl der Aufbaukomponenten können hierbei PU-Hartschaumstoffe erhalten werden, die sehr niedrige Wärmeleitzahlen und selbst bei geringer Dichte sehr gute mechanische Eigenschaften besitzen.

Als Treibmittel zur Herstellung der wärme- und kältedämmenden PU-Hartschaumstoffe wird, wie bereits erwähnt, bevorzugt Trichlorfluormethan eingesetzt. Die Innengehäuse und Türbekleidungen der Kühlschränke und die Deckeninnenseite der Gefriertruhen bestehen in großem Umfange aus schlagfestem Polystyrol. Nachteilig an diesem Material ist, daß es gegenüber flüssigem oder dampfförmigem Trichlorfluormethan nicht beständig ist. Bereits ein kurzfristiger Kontakt mit gasförmigem Trichlorfluormethan aus dem aufschäumenden Reaktionsgemisch zur Bildung des PU-Hartschaumstoffs kann an den tiefgezogenen Wandteilen aus schlagfestem Polystyrol wegen innerer Spannungen zu Schädigungen führen. Um diese sogenannte Spannungsrißkorrosion zu vermeiden, werden häufig Kombinationsplatten aus schlagfestem Polystyrol für die Tiefziehteile verwendet, bei denen die dem PU-Hartschaumstoff zugekehrte Seite durch eine dünne ABS- oder Polyethylenfolie geschützt ist. Nachteilig ist ferner, daß zwischen dem Gehäuseteil aus schlagfestem Polystyrol und dem PU-Hartschaumstoff keine oder nur eine unzureichende Haftung besteht, die die mechanische Festigkeit des hergestellten Formteils vermindert.

Eine zusammenfassende Übersicht über die Herstellung von Verbundelementen unter Verwendung von PU-Hartschaumstoffen als Deck- oder vorzugsweise Kernschicht sowie über die Anwendung von PU-Hartschaumstoffen in Hausgeräten und der Kühltechnik wurde publiziert in Polyurethane, Kunststoff-Handbuch, Band 7, 2. Auflage, 1983, herausgegeben von Dr. Günter Oertel, Carl Hanser Verlag, München, Wien (Seite 250ff.).

Neben dem bereits genannten Trichlorfluormethan, finden auch andere physikalisch wirkende Treibmittel zur Herstellung von PU-Hartschaumstoffen Verwendung. Beispielhaft genannt werden in der DE-C-1 045 644 (US 3 391 093) gasförmige Kohlenwasserstoffe mit nicht mehr als 3 C-Atomen, wie Methan, Ethan, Ethylen, Propan und Propylen und halogenierte Kohlenwasserstoffe wie z.B. Chlormethan, Dichlordifluormethan, Dichlorfluormethan, Chlordifluormethan, Chlorethan und Dichlortetrafluorethan sowie Octafluorcyclobutan und Hexafluorpropan, und in den ausgelegten Unterlagen des Belgischen Patents Nr. 596 608 Halogenalkane wie z.B. 1,1-Difluor-2,2-dichlorethan, 1,2-Difluor-1,2-dichlorethan, 1,1-Dichlorethan, 1-Fluor-1,2-dichlorethan, 1-Fluor-2,2-dichlorethan 1,2-Dichlorethan, Trichlorethan, Tetrachlorethan, 1-Fluor-1,2,2-trichlorethan, 1-Bromethan und 1,1,2-Trifluor-2-chlorethan.

Die genannten Treibmittel weisen zumindest teilweise den Nachteil auf, daß sie toxisch und/oder brennbar sind oder im Vergleich zu Trichlorfluormethan aufgrund ihres Siedepunkts eine niedrigere Gasausbeute beim Aufblähen des PU-Schaumstoffs besitzen, dem PU-Schaumstoff eine geringere Isolierwirkung verleihen und/oder ebenfalls Spannungsrißkorrosion verursachen.

Zur Vermeidung der Spannungsrißkorrosion am schlagfesten Polystyrol wird in der FR-B-1 564 594 zur Herstellung von Kühlschränken die Verwendung von Trichlortrifluorethan (F 113) und Dichlortetrafluorethan (F 114) beschrieben. Diese perhalogenierten Kohlenwasserstoffe stehen jedoch ebenso wie das Trichlorfluormethan in Verdacht die Ozonschicht zu schädigen, so daß sich ihr Einsatz aufgrund der Montrealvereinbarung zum Schutz der Ozonschicht verbietet.

Als weiteres Treibmittel sei Kohlendioxid genannt, das gemäß GB-A-21 16 574 in mindestens einer Aufbaukomponente zur Herstellung des PU-Hartschaumstoffs unter Druck gelöst, aus Salzen, wie z.B. Carbamaten, Carbonaten, wie z.B. Ammoniumcarbonat, oder Bicarbonaten thermisch abgespalten werden kann oder bei der Umsetzung von Isocyanat mit Wasser unter Bildung von Harnstoffgruppen gebildet wird. Neben den bekannten verarbeitungstechnischen Schwierigkeiten beim Umgang mit festem oder unter Druck stehendem gasförmigen Kohlendioxid, weisen die nach dieser Methode hergestellten PU-Hartschaumstoffe den schwerwiegenden Nachteil auf, daß diese aufgrund der im Vergleich zu Trichlorfluormethan, doppelt so hohen Wärmeleitfähigkeit des Kohlendioxids, eine niedrigeren Isolierwert zeigen und daher derzeit nicht allgemein akzeptiert werden.

Die Aufgabe der vorliegenden Erfindung bestand darin, Verbundelemente, insbesondere für Kühlmöbelgehäuse, mit verbesserter Beständigkeit gegen Spannungsrißkorrision zu entwickeln, wobei die obengenannten Nachteile, insbesondere hinsichtlich der Toxizität und Umweltschädlichkeit des Treibmittels im bzw. bei der Herstellung des Dämmstoffs, möglichst weitgehend beseitigt werden sollten.

Diese Aufgabe konnte überraschenderweise gelöst werden durch die Verwendung von schlagfestem Polystyrol in Verbindung mit durch Difluorchlormethan aufgeschäumten PU-Schaumstoffen.

Gegenstand der Erfindung sind somit Verbundelemente mit verbesserter Beständigkeit gegen Spannungsrißkorrosion, die bestehen aus

A) mindestens einer Deckschicht aus Polystyrol, bevorzugt schlagfestem Polystyrol und

B) einer Schicht aus PU-Schaumstoff, bevorzugt PU-Hartschaumstoff,

und die dadurch gekennzeichnet sind, daß der PU-Schaumstoff unter Verwendung von Difluorchlormethan als Treibmittel hergestellt wird.

Gegenstand der Erfindung ist ferner die Verwendung derartige Verbundelemente für Kühlmöbelgehäuse nach Anspruch 8.

Das zur Herstellung des PU-Schaumstoffs erfindungsgemäß geeignete Treibmittel Difluorchlormethan weist den Vorteil auf, daß es ungiftig und unbrennbar ist sowie als technisches Produkt preisgünstig in großen Mengen zur Verfügung steht. Der Wärmeleitfähigkeitskoeffizient von Difluorchlormethan ist zwar größer als der von Trichlorfluormethan, jedoch deutlich kleiner als der von Kohlendioxid. Vorteilhaft ist ferner, daß das gasförmige, bei -40,8°C siedende Difluorchlormethan in den Polyhydroxylverbindungen zur Herstellung der PU-Schaumstoffe sehr gut löslich ist. Die Löslichkeit liegt z.B. deutlich höher als die des ebenfalls gasförmigen, bei -29,8°C siedenden Dichlordifluormethans, das bei speziellen Prozessen zur Herstellung von PU-Hartschaumstoffen als Vorschäummittel in geringen Mengen eingesetzt wird. Die Löslichkeit des Difluorchlormethans beträgt je nach Art der PU-Schaumstoff-Formulierung bei 20°C von 4 bis 6 Gew.%, bezogen auf das Gewicht der Polyhydroxylverbindung, pro bar Druck.

Sofern durch das Difluorchlormethan eine Schädigung der Ozonschicht eintreten sollte, wäre diese mengenbezogen im Vergleich zu Trichlorfluormethan um den Faktor 20 kleiner, wobei dieser vorteilhafte Effekt durch die höhere Gasausbeute beim Schäumen noch verstärkt würde.

Die erfindungsgemäßen Verbundelemente besitzen mindestens eine, vorzugsweise jedoch zwei Deckschichten aus Polystyrol, bevorzugt schlagfestem Polystyrol und eine Zwischenschicht aus PU-, vorzugsweise PU-Hartschaumstoff. Nach einer insbesondere bevorzugten Ausführungsform werden jedoch, z.B. bei der Kühlmöbelgehäuseherstellung, die Hohlräume von schlagfesten Polystyrolformkörpern ausgeschäumt, so daß der PU-Hartschaumstoff allseitig eine Polystyroldeckschicht aufweist.

A) Zur Herstellung der Deckschicht (A) eignen sich Polystyrole, vorzugsweise schlagfeste Polystyrole mit folgenden mechanischen Eigenschaften:

einer Zugfestigkeit nach DIN 53455 von 20 bis 45 N/mm$^2$, vorzugsweise von 24 bis 32 N/mm$^2$,

einer Reißdehnung nach DIN 53455 von 15 bis 45 %, vorzugsweise von 35 bis 42 %,

einem Elastizitätsmodul (Zugversuch) nach DIN 53457 von 1650 bis 2800 N/mm$^2$, vorzugsweise von 1650 bis 2000 N/mm$^2$,

einer Biegefestigkeit nach DIN 53452 von 36 bis 78 N/mm$^2$, vorzugsweise von 36 bis 50 N/mm$^2$,

einer Schlagzähigkeit nach DIN 53453 bei 23°C von ohne Bruch bis 65 kJ/m$^2$ und größer, vorzugsweise ohne Bruch und bei -40°C von ohne Bruch bis 65 kJ/m$^2$ und größer, vorzugsweise von 58 bis 65 kJ/m$^2$

3

und

einer Kerbschlagzähigkeit nach DIN 53453 von 4 bis 10,5 kJ/m², vorzugsweise von 7 bis 9 kJ/m², wobei die mechanischen Eigenschaften ermittelt werden an spritzgegossenen Normkleinstäben oder nach DIN 53455 an Schulterstäben. Polystyrole mit den ausgewählten mechanischen Eigenschaften gehören zu den bekannten Handelsprodukten.

B) Wie bereits mehrfach dargelegt wurde, besteht die PU-Schaumstoffschicht (B), vorzugsweise PU-Schaumstoffmittelschicht und insbesondere der mit PU ausgeschäumte Formkörperhohlraum aus einem PU-Hartschaumstoff, der hergestellt wird durch Umsetzung von

a) organischen, vorzugsweise aromatischen Polyisocyanaten mit

b) mindestens einer Polyhydroxylverbindung mit einer Funktionalität von 2 bis 8, und einer Hydroxylzahl von 300 bis 850, und gegebenenfalls

c) Kettenverlängerungs- und/oder Vernetzungsmitteln

in Gegenwart von

d) Katalysatoren und

e) Difluorchlormethan als Treibmittel sowie

f) gegebenenfalls Hilfsmitteln und/oder Zusatzstoffen.

Zu den Aufbaukomponenten (a) bis (f) zur Herstellung der PU-Schaumstoffe ist im einzelnen folgendes auszuführen:

a) Als organische Polyisocyanate kommen die an sich bekannten aliphatischen, cycloaliphatischen, araliphatischen und vorzugsweise aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Di-cyclohexylmethan-diisocyanat sowie die entsprechenden Isomerengemische und vorzugsweise aromatischen Di- und Polyisocyanate, wie z.B 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2' Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 1500 modifiziertes 4,4'-Diphenylmethan-diisocyanat oder 2,4- bzw. 2,6-Toluylendiisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 9 Gew.%, vorzugsweise von 21 bis 14 Gew.% bezogen auf das Gesamtgewicht, hergestellt aus den nachfolgend beschriebenen Polyester- und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.

Besonders bewährt haben sich als organische Polyisocyanate und kommen daher vorzugsweise zur Anwendung zur Herstellung der PU-Schaumstoffe: Mischungen aus 2,4- und 2,6-Toluylen-diisocyanaten, Mischungen aus Toluylen-diisocyanaten und Roh-MDI oder Mischungen aus modifizierte Urethangruppen enthaltende organische Polyisocyanate mit einem NCO-Gehalt von 33,6 bis 15 Gew.%, insbesondere auf

4

Basis von 4,4'-Diphenylmethan-diisocyanat oder Diphenylmethan-diisocyanat-Isomerengemischen und Roh-MDI und insbesondere Roh-MDI mit einem Diphenylmethan-diisocyanat-Isomerengehalt von 30 bis 80 Gew.%.

b) Als Polyhydroxylverbindungen (b) mit einer Funktionalität von 2 bis 8, vorzugsweise von 3 bis 8 und einer Hydroxylzahl von 150 bis 850, vorzugsweise von 350 bis 800, kommen beispielsweise in Betracht: Polythioether-polyole, Polyesteramide, hydroxylgruppenhaltige Polyacetale, hydroxylgruppenhaltige aliphatische Polycarbonate und vorzugsweise Polyester-polyole und Polyether-polyole. Anwendung finden auch Mischungen aus mindestens zwei der genannten Polyole, sofern diese eine durchschnittliche Funktionalität und Hydroxylzahl im vorgenannten Bereich aufweisen.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. $\varepsilon$-Caprolacton oder Hydroxycarbonsäuren, z.B. $\omega$-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlendioxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 3 und eine Hydroxylzahl von 150 bis 400 und insbesondere von 200 bis 300.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und mindestens einem Startermolekül, das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere drei- und/oder höherwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Sucrose.

Die Polyether-polyole besitzen eine Funktionalität von vorzugsweise 3 bis 8 und insbesondere 3 und 6 und Hydroxylzahlen von 300 bis 850 und insbesondere von 350 bis 800.

Als Polyether-polyole eignen sich ferner Melamin-Polyol-Dispersionen gemäß EP-A-23 987 (US-A-4 293 657), Polymer-Polyol-Dispersionen, hergestellt aus Polyepoxiden und Epoxidharzhärtern in Gegenwart von Polyolen gemäß DE 29 43 689 (US 43 05 861), Dispersionen von aromatischen Polyestern in Polyhydroxylverbindungen gemäß EP-A-62 204 (US-A-44 35 537) oder DE-A 33 00 474, Dispersionen von organischen und/oder anorganischen Füllstoffen in Polyolen gemäß EP-A-11 751 (US 42 43 755), Polyharnstoff-Polyol-Dispersionen gemäß DE-A-31 25 402, Tris-(hydroxyalkyl)isocyanurat-Polyol-Dispersionen gemäß EP-A-136 571 (US 4 514 526) und Kristallitsuspensionen gemäß DE-A-33 42 176 und DE-A-33 42 177 (US 45 60 708), wobei die Ausführungen in den genannten Patentveröffentlichungen als Bestandteil der Patentbeschreibung zu betrachten sind.

Die Polyether-polyole können ebenso wie die Polyester-polyole einzeln oder in Form von Mischungen verwendet werden. Ferner können sie mit den obengenannten Dispersionen, Suspensionen oder Polyester-polyolen sowie den hydroxylgruppenhaltigen Polyesteramiden, Polyacetalen und/oder Polycarbonaten gemischt werden.

Als hydroxylgruppenhaltige Polyacetale kommen z.B. die aus Glykolen, wie Diethylenglykol, Triethylenglykol, 4,4'-Dihydroxy-ethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnen, vorwiegend linearen Kondensate.

Als Polyhydroxylverbindungen (b) besonders bewährt haben sich und daher vorzugsweise verwendet werden Mischungen, die bezogen auf 100 Gew.-Teile, zweckmäßigerweise enthalten:

bi) 0 bis 95 Gew.-Teile, vorzugsweise 20 bis 80 Gew.-Teile eines mit Sucrose gestarteten Polyether-polyols mit einer Hydroxylzahl von 300 bis 500, vorzugsweise 350 bis 450 auf der Grundlage von 1,2-Propylenoxid oder 1,2-Propylenoxid und Ethylenoxid,

bii) 0 bis 15 Gew.-Teilen, vorzugsweise 5 bis 15 Gew.-Teilen eines mit Sorbit gestarteten Polyether-polyols mit einer Hydroxylzahl von 400 bis 600, vorzugsweise von 450 bis 550 auf der Grundlage von 1,2-Propylenoxid oder 1,2-Propylenoxid und Ethylenoxid,

biii) 0 bis 20 Gew.-Teilen, vorzugweise 5 bis 15 Gew.-Teilen eines mit Ethylendiamin gestarteten Polyether-polyols mit einer Hydroxylzahl von 700 bis 850, vorzugsweise von 750 bis 800 auf der Grundlage von 1,2-Propylenoxid
und

biiii) 0 bis 60 Gew.-Teilen, vorzugsweise 5 bis 40 Gew.-Teilen eines Polyether-polyols mit einer Hydroxylzahl von 400 bis 600, vorzugsweise von 450 bis 550 auf Basis von 1,2-Propylenoxid oder 1,2-Propylenoxid und Ethylenoxid, hergestellt unter Verwendung einer Mischung aus Sucrose und Triethanolamin im Gewichtsverhältnis von 1:2 bis 2:1 als Startermolekül.

c) Die PU-Schaumstoffe können ohne oder unter Mitverwendung von Kettenverlängerungs- und/oder Vernetzungsmitteln hergestellt werden. Zur Modifizierung der mechanischen Eigenschaften kann sich jedoch der Zusatz von Kettenverlängerungsmitteln, Vernetzungsmitteln oder gegebenenfalls auch Gemische davon als vorteilhaft erweisen. Als Kettenverlängerungs- und/oder Vernetzungsmittel verwendet werden, vorzugsweise Alkanolamine und insbesondere Diole und/oder Triole mit Molekulargewichten kleiner als 400, vorzugsweise von 60 bis 300. In Betracht kommen beispielsweise Alkanolamine, wie z.B. Ethanolamin und/oder Isopropanolamin, Dialkanolamine wie z.B. Diethanolamin, N-Methyl-, N-Ethyldiethanolamin, Diisopropanolamin, Trialkanolamine wie z.B. Triethanolamin, Triisopropanolamin und die Additionsprodukte aus Ethylenoxid oder 1,2-Propylenoxid und Alkylendiaminen mit 2 bis 6 C-Atomen im Alkylenrest wie z.B. N,N,N',N'-Tetra(2-Hydroxyethyl)ethylendiamin und N,N,N',N'-Tetra(2-hydroxypropyl)ethylendiamin, aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und aromatischen Diaminen, wie z.B. Toluylendiaminen und/oder Diamino-diphenylmethanen sowie den vorgenannten Alkanolaminen, Diolen und/oder Triolen als Startermoleküle.

Sofern zur Herstellung der PU-Schaumstoffe Kettenverlängerungsmittel, Vernetzungsmittel oder Mischungen davon Anwendung finden, kommen diese zweckmäßigerweise in einer Menge von 0 bis 20 Gew.% vorzugsweise von 2 bis 5 Gew.%, bezogen auf das Gewicht der Polyhydroxylverbindung (b) zum Einsatz.

d) Als Katalysatoren (d) werden insbesondere Verbindungen verwendet, die die Reaktion der Hydroxylgruppen enthaltenden Verbindungen der Komponente (b) und gegebenenfalls (c) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl-und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Komponente (b).

e) Als Treibmittel zur Herstellung der PU-Schaumstoffe findet erfindungsgemäß Difluorchlormethan Verwendung. Geeignet sind jedoch auch Treibmittelmischungen aus Wasser, Difluorchlormethan und gegebenenfalls Trichlorfluormethan, insbesondere solche, die im wesentlichen bestehen aus

ei) 0,05 bis 4,0 Gew.-Teilen, vorzugsweise 0,1 bis 3,5 Gew.-Teilen Wasser,

eii) 5 bis 30 Gew.-Teilen, vorzugsweise 8 bis 20 Gew.-Teilen Difluorchlormethan und

eiii) 0 bis 30 Gew.-Teilen, vorzugsweise 0 bis 20 Gew.-Teilen Trichlorfluormethan.

In Abhängigkeit von der gewünschten Dichte des PU-Schaumstoffs wird das Difluorchlormethan in einer Menge von 10 bis 42 Gew.-Teilen, vorzugsweise von 12 bis 35 Gew.-Teilen und die Treibmittelmischung in einer Menge von 10 bis 35 Gew.-Teilen, vorzugsweise von 10 bis 30 Gew.-Teilen jeweils bezogen auf 100 Gew.-Teile der Polyhydroxylverbindung (b) eingesetzt.

Das Difluorchlormethan wird hierzu nach an sich bekannten Methoden mindestens einer Aufbaukomponente (a) bis (c) zur Herstellung des PU-Schaumstoffs einverleibt oder es wird direkt der Reaktionsmischung, zweckmäßigerweise mittels einer geeigneten Mischvorrichtung, zugeführt. Das Difluorchlormethan kann beispielsweise, gegebenenfalls unter Rühren, durch die Polyhydroxylverbindung (b) bis zum Erreichen des für die gewünschte Schaumstoffdichte benötigten Difluorchlormethanpartialdrucks hindurchgeleitet werden oder es wird durch Aufpressen in einem geeigneten Vorratsbehälter in der Polyhydroxylverbindung und/oder nach seiner vorherigen Trocknung im Polyisocyanat gelöst. Nach einer anderen Methode wird es mittels einer vorgeschalteten Mischvorrichtung bis zum erforderlichen Partialdruck für die gewünschte Schaumstoffdichte in mindestens eine Aufbaukomponente, vorzugsweise die Polyhydroxylverbindung, eingemischt oder es wird über ein Gasmeßgerät und eine separate Zuleitung direkt in den Mischkopf eindosiert und dort mit den übrigen Aufbaukomponenten zur Herstellung des PU-Schaumstoffs intensiv gemischt.

f) Der Reaktionsmischung zur Herstellung der PU-Schaumstoffe können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten Verbundelemente verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Schaumstoffe für die Verbundelemente werden die organischen, gegebenenfalls modifizierten Polyisocyanate (a), die Polyhydroxylverbindungen (b) und gegebenenfalls Kettenverlängerungsmittel und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 2:1, vorzugsweise 0,95 bis 1,15:1 und insbesondere ungefähr 1,0 bis 1,10:1 beträgt.

Die erfindungsgemäßen Verbundelemente können nach an sich bekannten Verfahren diskontinuierlich oder kontinuierlich hergestellt werden. Nach einer zweckmäßigen Ausführungsform beschichtet man die Rückseite der Polystyroldeckschicht (A), z.B. durch Begießen oder Besprühen, mit der schaumfähigen Reaktionsmischung zur Bildung des PU-Schaumstoffs, und läßt die Reaktionsmischung aufschäumen und aushärten.

Nach einer anderen Methode kann die gebildete, teilweise oder vollständig ausgehärtete PU-Schaumstoffschicht zur Bildung eines Sandwichelements mit einer zweiten Deckschicht aus vorzugsweise schlagfestem Polystyrol oder einer Schutz- oder Dekorschicht z.B. aus unbedrucktem oder bedrucktem Papier, einer Folie aus Kunststoff, z.B. aus Polyethylen, Polyamid oder thermoplastischem Polyurethan, oder Metall, z.B. Aluminium versehen werden. Die schaumfähige Reaktionsmischung kann jedoch auch in ein offenes Polystyrolformteil eingefüllt und dort aufgeschäumt werden. Nach der bevorzugt angewandten Verfahrenstechnik, insbesondere zum Ausschäumen von Hohlräumen in Kühlmöbelgehäusen aus schlagfestem Polystyrol, wird die schaumfähige Reaktionsmischung mit einer Temperatur von 10 bis 90°C, vorzugsweise 20 bis 60°C, in den im wesentlichen geschlossenen Hohlraum des gegebenenfalls temperierten Formkörpers aus vorzugsweise schlagfestem Polystyrol eingefüllt oder unter einem Druck von 1 bis 10 bar eingespritzt und danach in dem geschlossenen Formkörperhohlraum unter Verdichtung aufschäumen gelassen. Die Formkörpertemperatur beträgt hierbei zweckmäßigerweise 15 bis 70°C, vorzugsweise 25 bis 50°C und der Verdichtungsgrad 1,2 bis 6, vorzugsweise 1,5 bis 4.

Die erfindungsgemäß verwendbaren PU-Schaumstoffe besitzen zweckmäßiger eine freigeschäumte Dichte von 21 bis 28 g/cm³.

Die erfindungsgemäßen Verbundelemente finden beispielsweise Verwendung als Sandwichelemente für Isolierzwecke und als Formkörper für Kühlmöbelgehäuse, insbesondere für Kühlschränke und Gefriertruhen.


Beispiel 1


Herstellung des PU-Hartschaumstoffs


A-Komponente:


Mischung aus

| | |
|---|---|
| 85 Gew.-Teilen | eines Polyoxypropylen-polyols mit einer durchschnittlichen Funktionalität von 4,3 und einer Hydroxylzahl von 400, hergestellt unter Verwendung einer wäßrigen Sucroselösung als Startermolekül, |
| 8 Gew.-Teilen | eines tetrafunktionalen Polyoxypropylen-polyols mit einer Hydroxylzahl von 770, hergestellt unter Verwendung von Ethylendiamin als Startermolekül, |
| 3 Gew.-Teilen | Glycerin, |
| 2 Gew.-Teilen | Wasser, |
| 1,5 Gew.-Teilen | eines Siloxan-polyether-copolymeren als Schaumstabilisator (Handelsprodukt Tegostab® B8409 der Goldschmidt AG, Essen) und |
| 2,0 Gew.-Teilen | einer Mischung aus Dimethylcyclohexylamin und Bis-(dimethylamino)ethyl-ether im Gewichtsverhältnis 4:1 als Katalysator. |


B-Komponente:


Mischung aus Diphenylmethan-diisocyanaten und Polyphenyl-polymethylen-polyisocyanaten (NCO-Gehalt 31 Gew.%)

5 kg der A-Komponente wurden in einem 10 Liter Vorratsbehälter 1 bis 2 Minuten mit einem kräftigen Difluorchlormethanstrom durchspült, um die Luft aus dem Vorratsbehälter zu verdrängen. Danach wurde die A-Komponente mit Difluorchlormethan solange begast, bis der Druck im Vorratsbehälter 3,2 bar betrug. Hierbei wurden 15 Gew.-Teile Difluorchlormethan in 100 Gew.-Teilen der A-Komponente gelöst.

Das als Deckschicht (A) bzw. zur Herstellung des offenen, kastenförmigen Formwerkzeugs verwendete schlagfeste Polystyrol besaß folgende mechanische Eigenschaften:


```
Zugfestigkeit nach DIN 53455            :    30 N/mm²
Reißdehnung nach DIN 53455              :    40 %
Elastizitätsmodul (Zugversuch nach DIN 53457: 1900 N/mm²
Biegefestigkeit nach DIN 53452          :    46 N/mm²
Schlagzähigkeit nach DIN 53453 bei   23°C   : kein Bruch kJ/m²
                               bei  -40°C   : > 60 kJ/m² und
eine Kerbschlagzähigkeit nach DIN 53453 von :    8 kJ/m²
```


Die difluorchlormethanhaltige A-Komponente und die B-Komponente wurden mit Hilfe einer Hochdruckschaumapparatur im Gewichtsverhältnis von 100:140 gemischt, die feinblasig, sahneförmige Reaktionsmischung in die offene, kastenförmige Form aus dem oben beschriebenen schlagfesten Polystyrol eingefüllt und dort aufschäumen und aushärten gelassen.

An der schaumfähigen Reaktionsmischung und dem erhaltenen PU-Hartschaumstoff wurden folgende Eigenschaften gemessen:

```
Liegezeit                                      : 0 - 1 sec
Abbindezeit                                    : 42 sec
Dichte                                         : 26 g/l
Zellbild                                       : gut
Lambda-Wert                                    : 0,0188 W/mK
Druckfestigkeit parallel zur Schäumrichtung : 153 kPa (DIN 53421)
Druckfestigkeit senkrecht zur Schäumrichtung:  97 kPa (DIN 53421)
```

Beispiel 2

Man verfuhr analog den Angaben von Beispiel 1, beschichtete jedoch eine 1 mm dicke Platte aus dem vorgenannten schlagfesten Polystyrol mit der schaumfähigen Reaktionsmischung in einer solchen Menge, daß der gebildete PU-Hartschaumstoffe eine Schichtdicke von 50 mm besaß.

Das erhaltene Verbundelement wurde 20 Minuten lang auf pulverisiertes Kohlendioxid gelegt. Nach dem Auftauen zeigten sich an dem Verbundelement keinerlei Anzeichen einer Spannungsrißkorrosion.

Vergleichsbeispiel

Man verfuhr analog den Angaben des Beispiels 2, verwendete jedoch als Treibmittel in der A-Komponente anstelle von Difluorchlormethan 35 Gew.-Teile Trichlorfluormethan.

Zur Herstellung des PU-Hartschaumstoffs wurden ferner die A- und B-Komponente im Gewichtsverhältnis von 100:150 gemischt.

Das erhaltene Verbundelement zeigte nach 20-minütiger Lagerung auf pulverförmigem Kohlendioxid und anschließendem Auftauen starke Blasen und Risse, typische Anzeichen einer starken Spannungsrißkorrosion.

An einem aus der gleichen A- und B-Komponente hergestellten PU-Hartschaum wurden die folgenden Eigenschaften ermittelt:

```
Liegezeit                                      : 6 sec
Abbindezeit                                    : 40 sec
Dichte                                         : 23 g/l
Zellbild                                       : gut
Lambda-Wert                                    : 0,0174 W/mK
Druckfestigkeit parallel zur Schäumrichtung : 139 kPa (DIN 53421)
Druckfestigkeit senkrecht zur Schäumrichtung:  94 kPa (DIN 53421)
```

Das Beispiel 1 und Vergleichsbeispiel lehrt ferner, daß der mit Difluorchlormethan getriebene PU-Hartschaumstoffe eine verbesserte Druckfestigkeit nach DIN 53421 parallel und senkrecht zur Schaumrichtung besitzt.

**Patentansprüche**

1. Verbundelemente mit verbesserter Beständigkeit gegen Spannungsrißkorrosion, bestehend aus
   A) mindestens einer Deckschicht aus Polystyrol und
   B) einer Schicht aus Polyurethan-Schaumstoff,
   dadurch gekennzeichnet, daß der Polyurethan-Schaumstoff unter Verwendung von Difluorchlormethan als Treibmittel hergestellt wird.

2. Verbundelement nach Anspruch 1, dadurch gekennzeichnet, daß der Polyurethan-Schaumstoff hergestellt wird unter Verwendung einer Treibmittelmischung, bestehend aus
   i) 0,05 bis 4,0 Gew.-Teilen Wasser,

ii) 5 bis 30 Gew.-Teilen Difluorchlormethan und

iii) 0 bis 30 Gew.-Teilen Trichlorfluormethan.

3. Verbundelement nach Anspruch 1 oder 2, dadurch gekennzeichnet, daß die Deckschicht (A) besteht aus einem schlagfesten Polystyrol mit

einer Zugfestigkeit nach DIN 53455 von 20 bis 45 N/mm$^2$,

einer Reißdehnung nach DIN 53455 von 15 bis 45 %,

einem Elastizitätsmodul (Zugversuch) nach DIN 53457 von 1650 bis 2800 N/mm$^2$,

einer Biegefestigkeit nach DIN 53452 von 36 bis 78 N/mm$^2$,

einer Schlagzähigkeit nach DIN 53453 bei 23°C von ohne Bruch bis 65 kJ/m$^2$ und größer und bei -40°C von ohne Bruch bis 65 kJ/m$^2$ und größer und

einer Kerbschlagzähigkeit nach DIN 53453 von 4 bis 10,5 kJ/m$^2$,

gemessen an spritzgegossenen Normkleinstäben oder nach DIN 53455 an Schulterstäben.

4. Verbundelemente nach einem der Ansprüche 1 bis 3, dadurch gekennzeichnet, daß die Schicht (B) aus einem mit Difluorchlormethan getriebenen Polyurethan-Hartschaumstoff besteht.

5. Verbundelemente nach einem der Ansprüche 1 bis 3, dadurch gekennzeichnet, daß der Polyurethan-Schaumstoff der Schicht (B) hergestellt wird durch Umsetzung von

a) organischen, vorzugsweise aromatischen Polyisocyanaten mit

b) mindestens einer Polyhydroxylverbindung mit einer Funktionalität von 2 bis 8 und einer Hydroxylzahl von 150 bis 850 und gegebenenfalls

c) Kettenverlängerungs- und/oder Vernetzungsmitteln

in Gegenwart von

d) Katalysatoren,

e) Difluorchlormethan oder einer Treibmittelmischung, bestehend aus

ei) 0,05 bis 4,0 Gew.-Teilen Wasser,

eii) 5 bis 30 Gew.-Teilen Difluorchlormethan und

eiii) 0 bis 30 Gew.-Teilen Trichlorfluormethan,

die, bezogen auf 100 Gew.-Teile der Polyhydroxylverbindung (b), in einer Menge von 10 bis 35 Gew.-Teilen eingesetzt wird und

f) gegebenenfalls Hilfsmitteln und/oder Zusatzstoffen.

6. Verbundelemente nach einem der Ansprüche 1 bis 5, dadurch gekennzeichnet, daß zur Herstellung der Schicht (B) aus Polyurethan-Hartschaumstoff als organisches Polyisocyanat (a) eine Mischung aus Diphenylmethan-diisocyanaten und Polyphenyl-polymethylen-polyisocyanaten mit einem Diphenylmethan-diisocyanat-Isomerengehalt von 30 bis 80 Gew.% verwendet wird.

7. Verbundelemente nach einem der Ansprüche 1 bis 6, dadurch gekennzeichnet, daß zur Herstellung der Schicht (B) aus Polyurethan-Hartschaumstoff als Polyhydroxylverbindung eine Mischung verwendet wird, die, bezogen auf 100 Gew.-Teile, enthält

bi) 0 bis 95 Gew.-Teile eines Sucrose gestarteten Polyether-polyols mit einer Hydroxylzahl von 300 bis 500,

bii) 0 bis 15 Gew.-Teile eines Sorbit gestarteten Polyether-polyols mit einer Hydroxylzahl von 400 bis 600,

biii) 0 bis 20 Gew.-Teilen eines Ethylendiamin gestarteten Polyether-polyols mit einer Hydroxylzahl von 700 bis 850 und

biiii) 0 bis 60 Gew.-Teilen eines Polyether-polyols mit einer Hydroxylzahl von 400 bis 600, hergestellt unter Verwendung einer Sucrose-Triethanolamin-Mischung als Startermoleküle.

8. Verbundelemente mit verbesserter Beständigkeit gegen Spannungsrißkorrosion für Kühlmöbelgehäuse, bestehend aus

A) einer Deckschicht aus schlagfestem Polystyrol und

B) einer Zwischenschicht aus Polyurethan-Hartschaumstoff,

erhalten durch Ausschäumen eines Hohlkörpers aus schlagfestem Polystyrol, dadurch gekennzeichnet, daß der Polyurethan-Hartschaumstoff hergestellt wird durch Umsetzung von

a) aromatischen Polyisocyanaten mit

b) mindestens einer Polyhydroxylverbindung mit einer Funktionalität von 2 bis 8 und einer Hydroxylzahl von 150 bis 850 und gegebenenfalls

c) Kettenverlängerungs- und/oder Vernetzungsmitteln

in Gegenwart von

d) Katalysatoren,

e) Difluorchlormethan als Treibmittel und

f) gegebenenfalls Hilfsmitteln und/oder Zusatzstoffen.

Einbringen der fließfähigen Reaktionsmischung in den Hohlkörper und Aufschäumen lassen unter Verdichtung.

9. Verbundelemente nach Anspruch 8, dadurch gekennzeichnet, daß man die Reaktionsmischung in dem Hohlkörper unter Verdichtung mit einem Verdichtungsgrad von 1,2 bis 6 aufschäumen läßt.

10. Verbundelemente nach Anspruch 8, dadurch gekennzeichnet, daß man als Treibmittel e) eine Mischung, bestehend aus

ei) 0,05 bis 4,0 Gew.-Teilen Wasser,

eii) 5 bis 30 Gew.-Teilen Difluorchlormethan und

eiii) 0 bis 30 Gew.-Teilen Trichlorfluormethan,

verwendet und diese, bezogen auf 100 Gew.-Teile der Polyhydroxylverbindung (b), in einer Menge von 10 bis 35 Gew.-Teilen einsetzt.

## Claims

1. A composite element having improved resistance to environmental stress cracking, comprising

A) at least one outer layer of polystyrene and

B) a layer of polyurethane foam, wherein the polyurethane foam is produced using difluorochloromethane as blowing agent.

2. A composite element as claimed in claim 1, wherein the polyurethane foam is produced using a blowing agent mixture comprising

i) from 0.05 to 4.0 parts by weight of water,

ii) from 5 to 30 parts by weight of difluorochloromethane and

iii) from 0 to 30 parts by weight of trichlorofluoromethane.

3. A composite element as claimed in claim 1 or 2, wherein the outer layer (A) comprises a high-impact polystyrene having

a tensile strength in accordance with DIN 53455 of from 20 to 45 $N/mm^2$,

an elongation at break in accordance with DIN 53455 of from 15 to 45%,

a modulus of elasticity (tensile test) in accordance with DIN 53457 of from 1650 to 2800 $N/m^2$,

a flexural strength in accordance with DIN 53452 of from 36 to 78 $N/mm^2$,

an impact strength in accordance with DIN 53453 at 23°C of from no fracture to 65 $kJ/m^2$ or more and at -40°C of from no fracture to 65 $kJ/m^2$ or more, and

a notched impact strength in accordance with DIN 53453 of from 4 to 10.5 $kJ/m^2$,

measured on small standard injection-molded specimens or in accordance with DIN 53455 on dumbbell test specimens.

4. A composite element as claimed in any one of claims 1 to 3, wherein layer (B) comprises a difluorochloromethane-blown rigid polyurethane foam.

5. A composite element as claimed in any one of claims 1 to 3, wherein the polyurethane foam of layer (B) is produced by reacting

a) organic, preferably aromatic polyisocyanates with

b) at least one polyhydroxyl compound having a functionality of from 2 to 8 and a hydroxyl number of from 150 to 850, and, if desired,

c) chain extenders and/or crosslinking agents,

in the presence of

d) catalysts,

e) difluorochloromethane or a blowing agent mixture comprising

ei) from 0.05 to 4.0 parts by weight of water,

eii) from 5 to 30 parts by weight of difluorochloromethane and

eiii) from 0 to 30 parts by weight of trichlorofluoromethane,
which is employed in an amount of from 10 to 35 parts by weight, based on 100 parts by weight of the polyhydroxyl compound (b), and
f) in the presence or absence of assistants and/or additives.

6. A composite element as claimed in any one of claims 1 to 5, wherein layer (B) is produced from rigid polyurethane foam using, as the organic polyisocyanate (a), a mixture of diphenylmethane diisocyanates and polyphenylpolymethylene polyisocyanates having a diphenylmethane diisocyanate isomer content of from 30 to 80% by weight.

7. A composite element as claimed in any one of claims 1 to 6, wherein layer (B) is produced from rigid polyurethane foam using, as polyhydroxyl compound, a mixture comprising, based on 100 parts by weight,
bi) from 0 to 95 parts by weight of a sucrose-initiated polyether-polyol having a hydroxyl number of from 300 to 500,
bii) from 0 to 15 parts by weight of a sorbitol-initiated polyether-polyol having a hydroxyl number of from 400 to 600,
biii) from 0 to 20 parts by weight of an ethylenediamine-initiated polyether-polyol having a hydroxyl number of from 700 to 850, and
biiii) from 0 to 60 parts by weight of a polyetherpolyol having a hydroxyl number of from 400 to 600 and prepared using a sucrose/ triethanolamine mixture as initiator.

8. A composite element having improved resistance to environmental stress cracking for refrigeration equipment housings, comprising
A) an outer layer of high-impact polystyrene and
B) an interlayer of rigid polyurethane foam, obtained by expanding a hollow element made of high-impact polystyrene, wherein the rigid polyurethane foam is produced by reacting
a) aromatic polyisocyanates with
b) at least one polyhydroxyl compound having a functionality of from 2 to 8 and a hydroxyl number of from 150 to 850, and, if desired,
c) chain extenders and/or crosslinking agents,
in the presence of
d) catalysts,
e) difluorochloromethane as blowing agent, and
f) in the presence or absence of assistants and/or additives,
introducing the flowable reaction mixture into the hollow elements, and expanding the mixture with compaction.

9. A composite element as claimed in claim 8, wherein the reaction mixture is allowed to expand in the hollow element with compaction at a degree of compaction of from 1.2 to 6.

10. A composite element as claimed in claim 8, wherein the blowing agent e) is a mixture comprising
ei) from 0.05 to 4.0 parts by weight of water,
eii) from 5 to 30 parts by weight of difluorochloromethane and
eiii) from 0 to 30 parts by weight of trichlorofluoromethane,
and this is employed in an amount of from 10 to 35 parts by weight, based on 100 parts by weight of the polyhydroxyl compound (b).

## Revendications

1. Eléments composites à résistance améliorée à la corrosion fissurante sous contrainte, constitués
A) d'au moins une couche de couverture en polystyrène et
B) d'une couche de polyuréthanne alvéolaire,
caractérisés par le fait que le polyuréthanne alvéolaire est produit avec utilisation de difluorochlorométhane comme agent d'expansion.

2. Eléments composites selon la revendication 1, caractérisés par le fait que le polyuréthanne alvéolaire est produit avec utilisation d'un mélange d'agents d'expansion constitué de
i) 0,05 à 4,0 parties en poids d'eau,

ii) 5 à 30 parties en poids de difluorochlorométhane et

iii) 0 à 30 parties en poids de trichlorofluorométhane.

3. Eléments composites selon l'une des revendications 1 et 2, caractérisés par le fait que la couche de couverture (A) est constituée d'un polystyrène résistant au choc ayant une résistance à la traction selon DIN 53455 de 20 à 45 N/mm$^2$,

un allongement à la rupture selon DIN 53455 de 15 à 45 %,

un module d'élasticité (essai de traction) selon DIN 53457 de 1650 à 2800 N/mm$^2$,

une résistance à la flexion selon DIN 53452 de 36 à 78 N/mm$^2$,

une résistance au choc sur barreau lisse selon DIN 53453, à 23°C, de, sans rupture, jusqu'à 65 kJ/m$^2$ ou plus et, à -40°C, de, sans rupture, jusqu'à 65 kJ/m$^2$ ou plus et une résistance au choc sur barreau entaillé selon DIN 53453 de 4 à 10,5 kJ/m$^2$,

mesurés sur petites éprouvettes normalisées moulées par injection ou selon DIN 53455 sur éprouvette épaulées.

4. Eléments composites selon l'une des revendications 1 à 3, caractérisés par le fait que la couche (B) est constituée de polyuréthanne alvéolaire rigide expansé au difluorochlorométhane.

5. Eléments composites selon l'une des revendications 1 à 3, caractérisés par le fait que le polyuréthanne alvéolaire de la couche (B) est produit par réaction de

a) polyisocyanates organiques, de préférence aromatiques, avec

b) au moins un composé polyhydroxylé ayant une fonctionnalité de 2 à 8 et un indice d'hydroxyle de 150 à 850 et éventuellement

c) des agents d'allongement de chaîne et/ou de réticulation en présence

d) de catalyseurs,

e) de difluorochlorométhane ou d'un mélange d'agents d'expansion constitué de

ei) 0,05 à 4,0 parties en poids d'eau,

eii) 5 à 30 parties en poids de difluorochlorométhane et

eiii) 0 à 30 parties en poids de trichlorofluorométhane, qui est employé dans une proportion de 10 à 35 parties en poids pour 100 parties en poids du composé polyhydroxylé (b), et

f) éventuellement d'adjuvants et/ou d'additifs.

6. Eléments composites selon l'une des revendications 1 à 5, caractérisés par le fait que, pour la production de la couche (B) en polyuréthanne alvéolaire rigide, est utilisé comme polyisocyanate organique (a) un mélange de diphénylméthanediisocyanates et de polyphényl-polyméthylène-polyisocyanates ayant une teneur en isomère en diphénylméthane-diisocyanates de 30 à 80 % en poids.

7. Eléments composites selon l'une des revendications 1 à 6, caractérisés par le fait que, pour la production de la couche (B) en polyuréthanne alvéolaire rigide, est utilisé comme composé polyhydoxylé un mélange qui contient, pour 100 parties en poids,

bi) 0 à 95 parties en poids d'un polyol de polyéther amorcé au saccharose ayant un indice d'hydroxyle de 300 à 500,

bii) 0 à 15 parties en poids d'un polyol de polyéther amorcé au sorbitol ayant un indice d'hydroxyle de 400 à 600,

biii) 0 à 20 parties en poids d'un polyol de polyéther amorcé à l'éthylènediamine ayant un indice d'hydroxyle de 700 à 850 et

biiii) 0 à 60 parties en poids d'un polyol de polyéther ayant un indice d'hydroxyle de 400 à 600, produit avec utilisation d'un mélange de saccharose et de triéthanolamine comme molécules d'amorçage.

8. Eléments composites à résistance améliorée à la corrosion fissurante sous contrainte pour corps de réfrigérateurs, constitués

A) d'une couche de couverture en polystyrène résistant au choc et

B) d'une couche intermédiaire en polyuréthanne alvéolaire rigide,

obtenus par remplissage de produit alvéolaire d'un corps creux en polystyrène résistant au choc, caractérisés par le fait que le polyuréthanne alvéolaire rigide est produit par réaction de

a) polyisocyanates aromatiques avec

b) au moins un composé polyhydroxylé ayant une fonctionnalité de 2 à 8 et un indice d'hydroxyde de 150 à 850 et éventuellement

c) des agents d'allongement de chaîne et/ou de réticulation en présence

d) de catalyseurs,

e) de difluorochlorométhane comme agent d'expansion et

f) éventuellement d'adjuvants et/ou d'additifs,

introduction du mélange réactionnel fluide dans le corps creux et réalisation de l'expansion avec compression.

9. Eléments composites selon la revendication 8, caractérisés par le fait qu'on fait s'expanser le mélange réactionnel dans le corps creux avec compression à un taux de 1,2 à 6.

10. Eléments composites selon la revendication 8, caractérisés par le fait qu'on utilise comme agent d'expansion e) un mélange constitué de

ei) 0,05 à 4,0 parties en poids d'eau,

eii) 5 à 30 parties en poids de difluorochlorométhane et

eiii) 0 à 30 parties en poids de trichlorofluorométhane et emploie celui-ci dans une proportion de 10 à 35 parties en poids pour 100 parties en poids du composé polyhydroxylé (b).